# EUROPÄISCHE PATENTSCHRIFT

(11) **EP 0 826 325 B1**
(45) Veröffentlichungstag und Bekanntmachung des Hinweises auf die Patenterteilung: **05.06.2002**
(21) Anmeldenummer: 97113629.6
(22) Anmeldetag: 07.08.1997
(51) Int. Cl.: A46B 13/02

(54) **Wasch- oder Polierwalze für Fahrzeugwaschanlagen**
Cylinder brush for automatic car washing systems
Brosse à rouleau pour installations de lavage de voiture automatisé

(30) Priorität: 27.08.1996 DE 19634545
(43) Veröffentlichungstag der Anmeldung: 04.03.1998
(73) Patentinhaber: WashTec Holding GmbH, 86153 Augsburg (DE)
(72) Erfinder: Decker, Wolfgang, 86441 Zusmarshausen-Wollbach (DE)
(74) Vertreter: Rapp, Bertram

(56) Entgegenhaltungen:
- DE-A- 1 954 254
- US-A- 1 775 186
- US-A- 3 067 444

## Beschreibung

Die Erfindung betrifft eine Wasch- oder Polierwalze für Fahrzeugwaschanlagen, mit einem rotierend antreibbaren Walzenkern, der mit einer Kombination von streifenförmigen Arbeitselementen aus weichem textil- oder fellartigem Material und aus nachgiebigen Stützelementen versehen ist, wobei jeweils mehrere Arbeitselemente an einer relativ zum Walzenkern drehbaren Tragscheibe aus flexiblem Material angeordnet sind und mehrere dieser Tragscheiben in Achsrichtung der Walze in einem solchen gegenseitigen Abstand vorgesehen sind, daß die Arbeitsbereiche ihrer Arbeitselemente zumindest aneinander angrenzen, wobei die Stützelemente zwischen jeweils zwei benachbarten Tragscheiben auf dem Walzenkern von diesem antreibbar angeordnet sind und die Drehmitnahme der Arbeitselemente mittels Reibung durch die an ihnen und/oder den Tragscheiben anliegende Stützelemente erfolgt, und wobei bei frei rotierender Walze der Arbeitsdurchmesser der Arbeitselemente größer ist als der Wirkdurchmesser der Stützelemente, so daß im wesentlichen nur die Arbeitselemente in Kontakt mit der Fahrzeugoberfläche kommen.

Eine derartige Wasch- oder Polierwalze für Fahrzeugwaschanlagen ist in der nicht vorveröffentlichten deutschen Patentanmeldung 195 42 544.8 beschrieben. Bei dieser Wasch- oder Polierwalze sind die Stützelemente als Borsten ausgebildet, die mit ihren radial inneren Enden an einem Stützelementträger in Form einer Kunststoffmatte fixiert sind. Die zunächst ebene Kunststoffmatte ist um den Walzenkern herumgelegt und mittels Hohlnieten mit dem Walzenkern drehfest verbunden. Die Borsten haben einen Wirkdurchmesser, der etwa dem Durchmesser der Tragscheiben entspricht, während die aus textilem Material, wie Filz, Vlies, Stoff oder dgl. bzw. auch aus natürlichem oder künstlichem Fell bestehenden Arbeitselemente radial nach außen über die Borsten vorstehen. Zum Waschen oder Polieren eines Fahrzeuges wird die Walze rotierend angetrieben. Die über die Stützelementträger drehfest mit dem Walzenkern verbundenen Stützelemente drehen sich zusammen mit dem Walzenkern. Da sie mit den Tragscheiben und auch den Arbeitselementen in Kontakt sind, werden die Tragscheiben und die Arbeitselemente durch Reibung von den Stützelementen (Borsten) mitgenommen und angetrieben. Bleibt eines der Arbeitselemente an einem Fahrzeugteil hängen, so wird das maximal übertragbare Drehmoment überwunden. Das betreffende Arbeitselement und die dazugehörige Tragscheibe werden gestoppt, während sich die übrigen Teile der Walze weiterdrehen. Damit wirken die Borsten wie eine Rutschkupplung. Gleichzeitig haben die Borsten aber auch einen Polstereffekt. Kommt die rotierende Walze mit der Fahrzeugoberfläche in Kontakt, dann legen sich die Arbeitselemente teilweise auf die Borsten und werden von diesen in einiger Entfernung vom Walzenkern elastisch abgestützt. Nimmt der Anpreßdruck weiter zu, dann hat der Antriebsmotor der Walze eine höhere Wirkstromaufnahme. Durch diese höhere Wirkstromaufnahme wird in bekannter Weise ein Signal an einen Stellmotor abgegeben, der dann die Walze so weit von der Fahrzeugoberfläche abhebt, bis wieder die vorbestimmte Wirkstromaufnahme am Antriebsmotor vorhanden ist. Es wird auf diese Weise in etwa immer die gleiche Eintauchtiefe der Fahrzeugoberfläche in die Walze sichergestellt. Obwohl sich diese Walze beim Waschen sehr gut bewährt hat, hat sie dennoch einige Nachteile. Die Kunststoffmatten mit den daran fixierten Borsten müssen am Walzenkern durch Hohlnieten fixiert werden. Sie sind außerdem verhältnismäßig teuer. Bei Beschädigung der Tragscheiben müssen die die Borsten tragenden Kunststoffmatten in mühevoller Arbeit von dem Walzenkern gelöst werden, was nur dadurch möglich ist, daß die Hohlnieten einzeln aufgebohrt werden. Nach erneuter Montage der Tragscheiben müssen dann die Kunststoffmatten jedoch erneut an den Walzenkern angenietet werden. Das Austauschen der wesentlichen Bestandteile der Walze ist damit relativ arbeitsaufwendig. Darüber hinaus müssen bei der bekannten Walze die Borsten für den gewünschten Polstereffekt relativ kurz gehalten werden und sie bestehen aus einem Material mit einem größeren Durchmesser als die Borsten normaler Waschbürsten. Die Borsten sind auch bei rotierender Waschbürste nach außen sichtbar und wirken relativ stachelig. Dies hat für einen Kunden, der anstelle einer Fahrzeugwäsche mit Waschbürsten mit Borstenbesatz Waschbürsten mit textilem Besatz der hier zur Debatte stehenden Art bevorzugt, optisch einen abschreckenden Effekt.

Aus der US 3 067 444 A ist eine Wasch- oder Polier-Walze bekannt, die rotierender Schaumstoffscheiben aufweist.

Ein weiteres Dokument US 1 775 186 offenbart rotierende profilierte Walzen aus gummiertem Material.

Der Erfindung liegt die Aufgabe zugrunde, eine Wasch- oder Polierbürste der eingangs beschriebenen Art aufzuzeigen, die einfacher im Aufbau ist und deren wesentliche Bestandteile leicht austauschbar sind.

Dies wird nach der Erfindung dadurch erreicht, daß die Stützelemente Stützscheiben aus Weichschaumstoff sind, daß die Stützscheiben jeweils eine zentrale, kreisförmige Öffnung aufweisen, daß die Tragscheiben und die Stützscheiben abwechselnd auf den Walzenkern aufgeschoben sind, daß an der äußeren Stirnfläche der beiden außen liegenden Stützscheiben jeweils eine mit dem Walzenkern verbundene bzw. verbindbare Haltescheibe anliegt, und daß der Durchmesser der Öffnung jeder Stützscheibe kleiner ist als der Durchmesser des Walzenkerns, derart, daß der Innenumfang der Öffnung mit Spannung am Walzenkern anliegt und nach Art einer Rutschkupplung ein begrenztes Drehmoment von dem Walzenkern auf die Stützscheibe übertragbar ist.

Die Stützscheiben aus Weichschaumstoff sind relativ billig in der Herstellung, denn sie können aus Schaumstoffplatten entsprechender Dicke gestanzt oder geschnitten werden. Zu ihrer Anbringung auf dem Walzenkern sind keinerlei zusätzliche Bauteile erforderlich. Die Stützscheiben werden unmittelbar auf den Walzenkern aufgeschoben und liegen aufgrund der unterschiedlichen Durchmesser von Öffnung und Walzenkern mit Spannung an diesem an. Diese Spannung reicht aus, um ein begrenztes Drehmoment vom Walzenkern auf die Stützscheiben und von diesen auf die Tragscheiben bzw. die Arbeitselemente zu übertragen. Wird dieses begrenzte Drehmoment überschritten, was z.B. der Fall sein kann, wenn eines der Arbeitselemente an einem Fahrzeugteil hängen bleibt, dann kann nicht nur die dem hängengebliebenen Arbeitselement zugeordnete Tragscheibe gegenüber den beiden benachbarten Stützscheiben durchrutschen, sondern es können auch die Stützscheiben mit dem Innenumfang ihrer Öffnungen auf dem sich weiterdrehenden Walzenkern rutschen. Damit wirken die Stützscheiben aus Weichschaumstoff wie eine Rutsch- oder Sicherheitskupplung. Da sowohl die Tragscheiben als auch die Stützscheiben nur von einem Ende des Walzenkerns her auf diesen aufgeschoben sind, können sie nach Lösen einer der beiden Haltescheiben leicht vom Walzenkern abgezogen werden, so daß ein Austausch beschädigter oder abgenutzter Tragscheiben und Stützscheiben mit geringem Arbeits- und Zeitaufwand möglich ist. Auch zum Reinigen können die Tragscheiben und Stützscheiben leicht vom Walzenkern entfernt werden. Das Weichschaumstoff-Material der Stützscheiben kann bei eventuell auftretender Verschmutzung leicht durch Ausschwenken in mit Waschzusätzen versehenem Wasser gereinigt werden. Weiterhin haben die aus Weichschaumstoff bestehenden Stützscheiben einen besonders guten Polstereffekt, so daß es selbst dann nicht zu Beschädigungen kommen kann, wenn ein Fahrzeug mit eigener Kraft durch die Waschanlage fährt. Bei geeigneter Wahl des Weichschaumstoffes, der offenporig sein sollte und eine geringe Wasseraufnahme aufweisen soll, wird erreicht, daß die Stützscheiben bei Rotation der Walze kaum Wasser aufnehmen, so daß Probleme mit sich änderndem Walzengewicht vermieden werden. Darüber hinaus verleihen die aus Weichschaumstoff bestehenden Stützscheiben der Wasch- oder Polierwalze auch ein ansprechendes, geschlossenes Aussehen und vermitteln dem Kunden den Eindruck, daß durch den Weichschaumstoff sein Fahrzeug keinesfalls beschädigt werden kann. Derartiges kann normalerweise in Wirklichkeit auch nicht auftreten, da sich die Arbeitselemente gegenseitig überlappen und sich bei größerem Druck zwischen Fahrzeugoberfläche und Arbeitselementen an den Umfang der Stützscheiben anlegen und diesen nach außen abdecken.

Vorteilhafte Ausgestaltungen der Erfindung sind in den Unteransprüchen angegeben.

Die Erfindung ist in folgendem, anhand eines in der Zeichnung dargestellten Ausführungsbeispieles näher erläutert. Es zeigen:

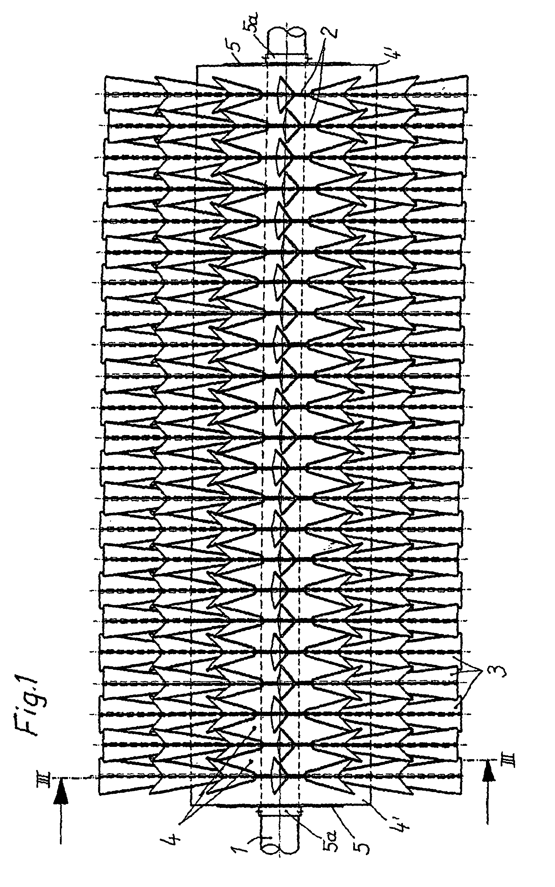

- Figur 1: eine Außenansicht der Wasch- oder Polierwalze,

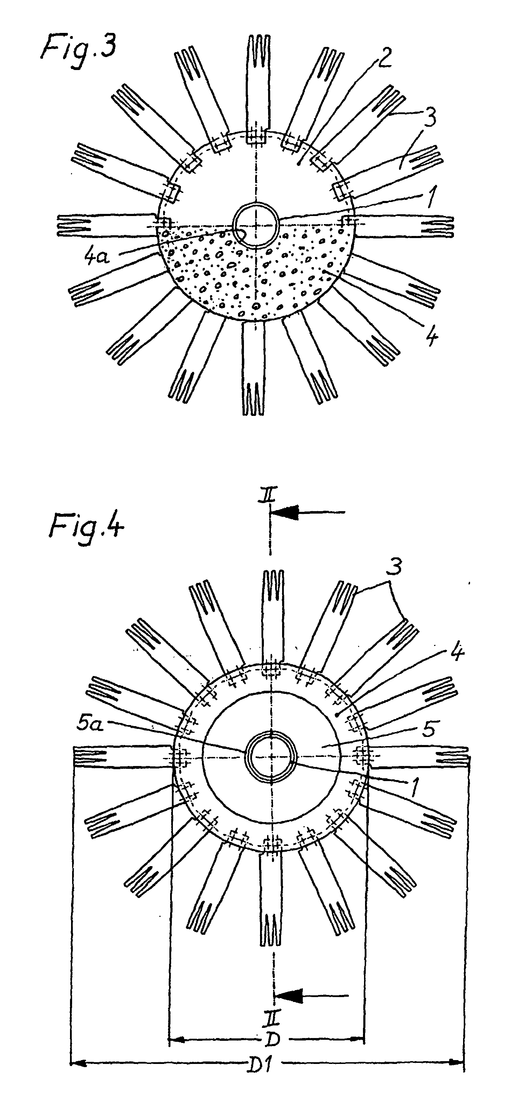

- Figur 2: einen Axialschnitt desselben nach der Linie II-II der Figur 4,
- Figur 3: einen Radialschnitt nach der Linie III-III der Figur 1,
- Figur 4: eine Stirnansicht in Richtung IV der Figur 2.

Nachdem die erfindungsgemäße Walze in gleicher Ausgestaltung zum Waschen oder Polieren eines Fahrzeuges verwendet werden kann, werden die auf die Fahrzeug- - oberfläche einwirkenden und mit dieser in Kontakt kommenden Waschelemente bzw. Polierelemente mit dem Sammelausdruck "Arbeitselemente" bezeichnet. Diese Arbeitselemente können als Lappen oder Streifen aus weichem Textilmaterial, wie Filz, Vlies, Stoff oder dgl. bzw. auch aus natürlichem oder künstlichem Fell bestehen.

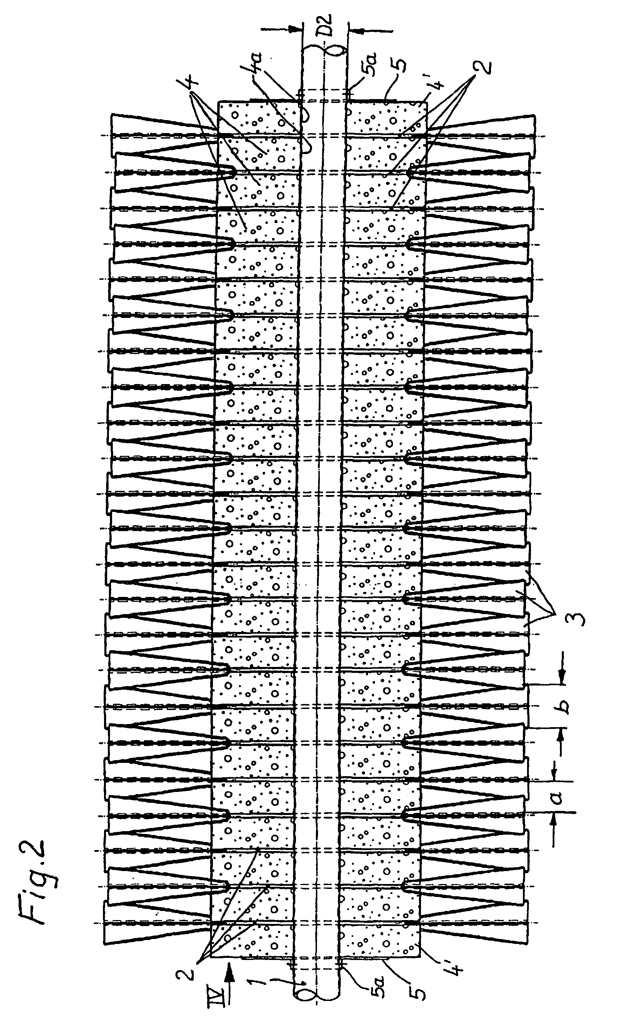

Die erfindungsgemäße Walze weist einen rotierend antreibbaren Walzenkern 1 auf, der aus einem Rohr bestehen kann. Auf diesem Walzenkern 1 sind mehrere Tragscheiben 2 aus flexiblem Material relativ zum Walzenkern 1 drehbar angeordnet. Zu diesem Zweck weist jede Tragscheibe eine zentrale, kreisförmige Ausnehmung 3 auf, deren Durchmesser etwas größer ist als der Durchmesser des Walzenkerns 1, so daß sich die Tragscheibe leicht auf dem Walzenkern drehen läßt. Die Tragscheiben 2 bestehen vorzugsweise aus flexiblem Kunststoff. Sie können jedoch auch aus textilem Material, wie Filz, Gewebe oder dgl. bestehen. Die Tragscheiben 2 sind in Achsrichtung der Walze in einem solchen gegenseitigen Abstand a angeordnet, daß sich die Arbeitsbereiche, wie insbesondere aus Figur 2 ersichtlich ist, der an den Tragscheiben angebrachten Arbeitselemente 3 in Achsrichtung der Walze überlappen oder zumindest aneinander angrenzen. Die Arbeitsbreite des Arbeitselementes 3 ist in Figur 2 mit b bezeichnet.

Die lappenförmigen Arbeitselemente 3 sind in der Nähe des Umfanges der Tragscheiben 2 mit diesen zweckmäßig lösbar verbunden. Als lösbare Verbindung kommen hauptsächlich Klettverschlüsse in Frage, deren eines Teil jeweils an der Tragscheibe 2 und deren anderes Teil am Arbeitselement 3 angenäht oder in sonstiger geeigneter Weise befestigt ist. Zur lösbaren Verbindung können jedoch auch Kunststoffbänder dienen. Da die Arbeitsbreite b der Arbeitselemente 3 im Verhältnis zum axialen Abstand a der Scheiben 2 so abgestimmt ist, daß die Breite b wesentlich größer ist als der axiale Abstand a, wird erreicht, daß die Arbeitselemente 3 die nachfolgend noch näher beschriebenen Stützscheiben 4 vollständig überdecken, wenn sie durch Kontakt mit der Fahrzeugoberfläche an die Stützscheiben 4 angedrückt werden. Hierdurch wird ein direkter Kontakt der Stützscheiben 4 mit der Fahrzeugoberfläche vermieden. Als Arbeitsdurchmesser D1 der Arbeitselemente 3 wird derjenige Durchmesser bezeichnet, den die radial äußeren Enden der Arbeitselemente bei frei rotierender Walze beschreiben. Als Wirkdurchmesser D ist der Durchmesser der Stützscheiben bezeichnet, der wesentlich kleiner ist als der Arbeitsdurchmesser D1 und der etwa dem Durchmesser der Tragscheiben 2 entspricht.

Zwischen zwei benachbarten Tragscheiben 2 ist jeweils eine Stützscheibe 4 aus Weichschaumstoff angeordnet, die eine mehrfache Funktion hat. Die Stützscheiben 4 sollten aus Weichschaumstoff mit geringer Wasseraufnahme bestehen. Besonders geeignet ist offenporiger Weichschaumstoff aus Polyurethan (PUR) mit einer Rohdichte von etwa 35 - 41 kg/m³. Dieses Material entspricht dem Material, wie man es als "Fliegenschwamm" zum Entfernen angetrockneter Insektenreste von Windschutzscheiben, Scheinwerfern, Stoßstangen und auch der Fahrzeugoberfläche verwendet. Da derartiges Material bei Rotation der Walze kaum Wasser aufnimmt, hat die Walze im wesentlichen gleichbleibendes Gewicht, wasdie Steuerung insbesondere von Walzen mit horizontaler Achse vereinfacht.

Die Stützscheiben 4 aus Weichschaumstoff haben eine axiale Dicke, die dem gewünschten Abstand a der Tragscheiben entspricht. Diese Dicke sollte etwa 70 - 110 mm, vorzugsweise etwa 80 mm, betragen. Jede Stützscheibe 4 weist eine zentrale, kreisförmige Öffnung 4a auf, deren Durchmesser vor dem Aufschieben der Stützscheibe auf den Walzenkern kleiner ist als der Durchmesser D2 des Walzenkerns. Beträgt der Durchmesser D2 des Walzenkerns beispielsweise 108 mm, dann sollte der Durchmesser der Öffnung 4a vor dem Aufschieben der Stutzscheibe 4 auf den Walzenkern 1 etwa 100 mm betragen. Der Durchmesser der zentralen Öffnung der Stützscheibe 4 sollte etwa 7 - 10% kleiner sein als der Durchmesser D2 des Walzenkerns 1. Auf diese Weise wird erreicht, daß der Innenumfang der Öffnung 4a mit Spannung am Walzenkern 1 anliegt und damit ein begrenztes Drehmoment von dem Walzenkern 1 auf die Stützscheibe 4 übertragbar ist. Wird dieses begrenzte Drehmoment überschritten, dann rutscht der Innenumfang der Öffnung 4a auf den Walzenkern 1.

Die Stützscheiben 4 und die Tragscheiben 2 sind abwechselnd auf den Walzenkern 1 aufgeschoben. Da weder die Tragscheiben 2 noch die Stützscheiben 4 fest mit dem Walzenkern verbunden sind, ist es erforderlich, die beiden außen liegenden Stützscheiben 4 gegen axiale Verschiebung zu sichern. Zu diesem Zweck ist an beiden Enden der Walze jeweils eine Haltescheibe 5 vorgesehen, die ebenfalls aus Kunststoffmaterial bestehen kann und die an der äußeren Stirnfläche der außen liegenden Stützscheibe 4 anliegt. Die Haltescheibe 5 weist einen Kragen 5a auf, der mit dem Walzenkern 1 durch Nieten oder Schrauben verbindbar ist. Die Haltescheiben 5 sind so am Walzenkern 1 befestigt, daß sie mit leichtem axialen Druck an den außen liegenden Stützscheiben 4' anliegen, wodurch sämtliche Stützscheiben und Tragscheiben aneinander gedrückt werden. Hierdurch sind die Tragscheiben 2 sozusagen zwischen den Stützscheiben 4 "eingeklemmt". Bei rotierender Walze wird das Drehmoment von dem Walzenkern 1 auf die Stützscheiben 4 und von deren Stirnflächen auf die Tragscheiben 2 sowie auch die radial inneren Enden der Arbeitselemente 3 übertragen. Auf diese Weise ist sichergestellt, daß die Tragscheiben 2 mit den daran befestigten Arbeitselementen 3 bei normalem Wasch- oder Polierwiderstand mit der Drehgeschwindigkeit des Walzenkerns 1 rotieren. Bei größerem Widerstand oder wenn z.B. eines dieser Arbeitselemente 3 an einem Fahrzeugteil hängen bleibt, bleibt die zugehörige Tragscheibe 2 stehen und rutscht gegenüber den benachbarten Stützscheiben 4 durch, während die ungebremsten Tragscheiben und Arbeitselemente weiter rotieren und ihre Funktion als Wasch- oder Polierelemente erfüllen. Damit wirken die Stützscheiben 4 wie eine Rutschkupplung. Gleichzeitig haben die Stützscheiben 4 auch einen Polstereffekt. Wenn nämlich der Anpreßdruck zwischen der Fahrzeugoberfläche und den Arbeitselementen 3 zunimmt, dann legen sich diese am Außenumfang der Stützscheiben 4 an. Nimmt der Anpreßdruck weiter zu, dann hat der Antriebsmotor der Walze auch eine höhere Wirkstromaufnahme. Durch diese höhere Wirkstromaufnahme wird in bekannter Weise ein Signal an einen Stellmotor abgegeben, der dann die Walze so weit von der Fahrzeugoberfläche abhebt, bis sich wieder die vorbestimmte Wirkstromaufnahme am Antriebsmotor einstellt. Wenn diese Art der Steuerung nicht oder nicht rasch genug erfolgt, dann macht sich der Polstereffekt der aus Weichschaumstoff bestehenden Stützscheiben 4 ebenfalls bemerkbar. Außerdem wird dann eine oder mehrere der Stützscheiben 4 so stark abgebremst, daß der Innenumfang ihrer Öffnungen 4a auf den Walzenkern 1 durchrutscht.

Die aus Weichschaumstoff bestehenden Stützscheiben wirken also in zweifacher Weise als Sicherheits- oder Rutschkupplung bei der Übertragung des Drehmoments vom Walzenkern 1 auf die Tragscheiben 2. Ferner dienen die Stützscheiben 4 als elastisches Polster zur Abstützung der Arbeitselemente 3. Schließlich haben die Stützscheiben 4 auch noch die Funktion von Abstandshaltern, indem sie die Tragscheiben 2 in dem vorbestimmten axialen Abstand a halten. Bei der Montage und insbesondere beim Austausch verschlissener Tragscheiben 2 und eventuell auch verschlissener Stützscheiben 4 haben diese ebenfalls Vorteile. Sowohl die Tragscheiben 2 als auch die Stützscheiben 4 sind nämlich lediglich auf den Walzenkern 1 aufgeschoben und in keinster Weise auf diesem befestigt. Nach dem Abnehmen einer der beiden Haltescheiben 5 kann man verschlissene Teile in kürzester Zeit durch axiales Abziehen vom Walzenkern 1 bzw. erneutes Aufschieben, austauschen oder auch zum Reinigen vom Walzenkern abnehmen.

## Patentansprüche

1. Wasch- oder Polierwalze für Fahrzeugwaschanlagen, mit einem rotierend antreibbaren Walzenkern (1), der mit einer Kombination von streifenförmigen Arbeitselementen (3) aus weichem textil- oder fellartigem Material und aus nachgiebigen Stützelementen (4, 4') versehen ist, wobei jeweils mehrere Arbeitselemente (3) an einer relativ zum Walzenkern (1) drehbaren Tragscheibe (2) aus flexiblem Material angeordnet sind und mehrere dieser Tragscheiben (2) in Achsrichtung der Walze (1) in solchem gegenseitigen Abstand nebeneinander vorgesehen sind, daß die Arbeitsbereiche ihrer Arbeitselemente (3) zumindest aneinander angrenzen, wobei die Stützelemente (4, 4') zwischen jeweils zwei benachbarten Tragscheiben (2) auf dem Walzenkern (1) von diesem antreibbar angeordnet sind und die Drehmitnahme der Arbeitselemente (3) mittels Reibung durch die an ihnen und/oder den Tragscheiben (2) anliegende Stützelemente (4, 4') erfolgt, und wobei bei frei rotierender Walze (1) der Arbeitsdurchmesser (D1) der Arbeitselemente (3) größer ist als der Wirkdurchmesser (D) der Stützelemente (4, 4'), so daß im wesentlichen nur die Arbeitselemente (3) in Kontakt mit der Fahrzeugoberfläche kommen, **dadurch gekennzeichnet, daß** die Stützelemente Stützscheiben (4, 4') aus Weichschaumstoff sind, daß die Stützscheiben (4, 4') jeweils eine zentrale, kreisförmige Öffnung (4a) aufweisen, daß die Tragscheiben (2) und die Stützscheiben abwechselnd auf den Walzenkern (1) aufgeschoben sind, daß an der äußeren Stirnfläche der beiden außen liegenden Stützscheiben (4') jeueils eine mit dem Walzenkern (1) verbundene bzw. verbindbare Haltescheibe (5) anliegt, und daß der Durchmesser der Öffnung (4a) jeder Stützacheibe (4, 4') kleiner ist als der Durchmesser (D2) des Walzenkerns (1), derart, daß der Innenumfang der Öffnung mit Spannung am Walzenkern anliegt und nach Art einer Rutschkupplung ein begrenztes Drehmoment von dem Walzenkern (1) auf die Stützscheibe (4, 4') übertragbar ist.

2. Walze nach Anspruch 1, **dadurch gekennzeichnet, daß** der Durchmesser (D) der Stützscheibe (4, 4') etwa so groß ist wie der Durchmesser der Tragscheibe (2).

3. Walze nach Anspruch 1 oder 2, **dadurch gekennzeichnet, daß** die Dicke (a) der Stützscheibe (4, 4') etwa 70 - 110 mm beträgt.

4. Walze nach Anspruch 3, **dadurch gekennzeichnet, daß** die Dicke (a) der Stützscheibe (4, 4') etwa 80 mm ist.

5. Walze nach einem der Ansprüche 1 - 4, **dadurch gekennzeichnet, daß** die Stützscheiben (4, 4') aus Weichschaumstoff mit geringer Wasseraufnahme bestehen.

6. Walze nach einem der Ansprüche 1 - 5, **dadurch gekennzeichnet, daß** die Stützscheiben (4, 4') aus offenporigem Weichschaumstoff bestehen.

7. Walze nach einem der Ansprüche 1 - 6, **dadurch gekennzeichnet, daß** die Stützscheiben (4, 4') aus offenporigem Polyurethan-(PUR-) Weichschaumstoff bestehen.

8. Walze nach Anspruch 7, **dadurch gekennzeichnet, daß** die Dichte des Weichschaumstoffes etwa 35 - 41 kg/m³ beträgt.

9. Walze nach einem der Ansprüche 1 - 8, **dadurch gekennzeichnet, daß** der Durchmesser der Öffnung um etwa 7 - 10% kleiner ist als der Durchmesser des Walzenkerns.

10. Walze nach Anspruch 1, **dadurch gekennzeichnet, daß** die Haltescheiben (5) mit axialer Spannung an den äußeren Stirnflächen der außenliegenden Stützscheiben (4') anliegen.

11. Walze nach einem der Ansprüche 1 - 10, **dadurch gekennzeichnet, daß** die axiale Dicke (a) der Stützscheiben (4, 4') kleiner ist als die Arbeitsbreite (b) der Arbeitselemente (3) in Achsrichtung der Walze.

12. Walze nach Anspruch 1, **dadurch gekennzeichnet, daß** jede Tragscheibe (2) eine zentrale, kreisförmige Ausnehmung aufweist, die den Walzenkern (1) zumindest mit solchem Abstand umgibt, daß die Tragscheibe (2) gegenüber dem Walzenkern drehbar ist.

13. Walze nach einem der Ansprüche 1 - 12, **dadurch gekennzeichnet, daß** die Tragscheiben (2) aus flexiblem Kunststoff bestehen.

14. Walze nach einem der Ansprüche 1 - 13, **dadurch gekennzeichnet, daß** die Tragscheiben (2) aus textilem Material, wie Filz, Gewebe oder dgl. bestehen.

15. Walze nach einem der Ansprüche 1 - 14, **dadurch gekennzeichnet, daß** die Arbeitselemente (3) über leicht lösbare Verbindungsmittel mit der Tragscheibe (2) verbunden sind.

16. Walze nach Anspruch 15, **dadurch gekennzeichnet, daß** die Verbindungsmittel als Klettverschlüsse ausgebildet sind.

## Claims

1. Washing or polishing roller for vehicle washing installations, with a roller core (1) which can be driven so as to rotate and is provided with a combination of strip-shaped working elements (3) made of soft textile-like or fleece-like material and yielding supporting elements (4, 4'), whereby in each case a plurality of working elements (3) are arranged on a carrier disc (2) which is made of flexible material and rotatable in relation to the roller core (1) and a plurality of these carrier discs (2) are provided next to one another in the axial direction of the roller (1) with such a mutual spacing that the working areas of their working elements (3) at least adjoin one another, whereby the supporting elements (4, 4') between every two neighbouring carrier discs (2) are arranged on the roller core (1) so as to be driveable by the latter, and the entrainment of the working elements (3) is effected by means of friction by the supporting elements (4, 4') bearing on them and/or on the carrier discs (2), and whereby the working diameter (D1) of the working elements (3) is greater than the effective diameter (D) of the supporting elements (4, 4') when the roller (1) is rotating freely, so that essentially only the working elements (3) come into contact with the surface of the vehicle, **characterised in that** the supporting elements are supporting discs (4, 4') made of soft foam material, **in that** the supporting discs (4, 4') in each case exhibit a central circular opening (4a), **in that** the carrier discs (2) and the supporting discs are slid on to the roller core (1) in alternation, **in that** in each case a retaining disc (5) which is or can be connected to the roller core (1) bears on the outer end face of the two supporting discs (4') lying on the outside, and **in that** the diameter of the opening (4a) of each supporting disc (4, 4') is smaller than the diameter (D2) of the roller core (1) such that the internal circumference of the opening bears on the roller core with tension and a limited torque can be transmitted from the roller core (1) to the supporting disc (4, 4') in the manner of a friction clutch.

2. Roller according to claim 1, **characterised in that** the diameter (D) of the supporting disc (4, 4') is roughly the same as the diameter of the carrier disc (2).

3. Roller according to claim 1 or 2, **characterised in that** the thickness (a) of the supporting disc (4, 4') is approximately 70 - 110 mm.

4. Roller according to claim 3, **characterised in that** the thickness (a) of the supporting disc (4, 4') is approximately 80 mm.

5. Roller according to one of claims 1 to 4, **characterised in that** the supporting discs (4, 4') are made of soft foam material with minimal water absorption.

6. Roller according to one of claims 1 to 5, **characterised in that** the supporting discs (4, 4') are made of open-pore soft foam material.

7. Roller according to one of claims 1 to 6, **characterised in that** the supporting discs (4, 4') are made of open-pore polyurethane (PUR) soft foam material.

8. Roller according to claim 7, **characterised in that** the density of the soft foam material is approximately 35 - 41 kg/m³.

9. Roller according to one of claims 1 to 8, **characterised in that** the diameter of the opening is 7 - 10% smaller than the diameter of the roller core.

10. Roller according to claim 1, **characterised in that** the retaining discs (5) bear on the external end faces of the supporting discs (4') lying on the outside with axial tension.

11. Roller according to one of claims 1 to 10, **characterised in that** the axial thickness (a) of the supporting discs (4, 4') is less than the working width (b) of the working elements (3) in the axial direction of the roller.

12. Roller according to claim 1, **characterised in that** each carrier disc (2) exhibits a central circular recess which surrounds the roller core (1) at least at such a distance that the carrier disc (2) is rotatable in relation to the roller core.

13. Roller according to one of claims 1 to 12, **characterised in that** the carrier discs (2) are made of flexible plastic.

14. Roller according to one of claims 1 to 13, **characterised in that** the carrier discs (2) are made of textile material, such as felt, fabric or the like.

15. Roller according to one of claims 1 to 14, **characterised in that** the working elements (3) are connected to the carrier disc (2) by easily detachable connecting means.

16. Roller according to claim 15, **characterised in that** the connecting means are embodied as hook and loop fasteners.

## Revendications

1. Rouleau de lavage et polissage pour installation de lavage de véhicule, comprenant un noyau de rouleau (1), pouvant être entraîné d'une manière rotative, qui est pourvu d'une combinaison d'éléments de travail (3) en forme de lanières, en une matière du type textile pu cuir souple, et d'éléments de soutien (4, 4') pouvant céder élastiquement, plusieurs éléments de travail (3) respectifs étant chaque fois disposés sur un disque porteur (2), pouvant tourner vis-à-vis du noyau de rouleau (1) et en une matière flexible, et plusieurs de ces disques porteurs (2) étant prévus côte à côte avec un tel espacement mutuel suivant la direction axiale du rouleau (1) que les zones de travail de leurs éléments de travail (3) sont au moins adjacentes les unes aux autres, tandis que les éléments de soutien (4, 4') sont disposés sur le noyau de rouleau (1), en pouvant être entraînée par celui-ci, chacun entre deux disques porteurs (2) voisins respectifs, et l'entraînement en rotation des éléments de travail (3) s'effectue par frottement au moyen des éléments de soutien (4, 4') appliqués sur eux et/ou sur les disques porteurs (2), et que, lorsque le rouleau (1) tourne librement, le diamètre de travail (D1) des éléments de travail (3) et supérieur au diamètre d'action (D) des éléments de soutien (4, 4'), de sorte qu'essentiellement seulement les éléments de travail (3) viennent en contact avec la surface du véhicule, **caractérisé en ce que** les éléments de soutien sont des disques de soutien (4, 4') en une matière cellulaire souple, **en ce que** les disques de soutien (4, 4') comportent chacun une ouverture centrale circulaire (4a) respective, **en ce que** les disques porteurs (2) et les disques de soutien sont enfilés d'une manière alternée sur le noyau de rouleau (1), **en ce que**, pour chaque surface frontale extérieure des deux disques de soutien (4') disposés extérieurement, un disque de maintien (5) respectif, relié ou pouvant être relié au noyau de rouleau (1), vient en appui sur cette surface frontale, et **en ce que** le diamètre de l'ouverture (4a) de chaque disque de soutien (4, 4') est inférieur au diamètre (D2) du noyau de rouleau (1), d'une manière telle que la périphérie intérieure de l'ouverture est appliquée, avec une certaine contrainte, sur le noyau de rouleau et qu'à la façon d'un accouplement à friction, un couple limité peut être transmis du noyau de rouleau (1) au disque de soutien (4, 4').

2. Rouleau suivant la revendication 1, **caractérisé en ce que** le diamètre (D) du disque de soutien (4, 4') est approximativement aussi grand que le diamètre du disque porteur (2).

3. Rouleau suivant la revendication 1 ou 2, **caractérisé en ce que** l'épaisseur (a) du disque de soutien (4, 4') vaut approximativement 70 - 110 mm.

4. Rouleau suivant la revendication 3, **caractérisé en ce que** l'épaisseur (a) du disque de soutien (4, 4') est d'approximativement 80 mm.

5. Rouleau suivant l'une des revendications 1 - 4, **caractérisé en ce que** les disques de soutien (4, 4') sont constitués d'une matière cellulaire souple manifestant une faible absorption d'eau.

6. Rouleau suivant l'une des revendications 1 - 5, **caractérisé en ce que** les disques de soutien (4, 4') sont constitués d'une matière cellulaire souple à pores ouverts.

7. Rouleau suivant l'une des revendications 1 - 6, **caractérisé en ce que** les disques de soutien (4, 4') sont constitués d'une matière cellulaire souple formée de polyuréthane (PUR) à pores ouverts.

8. Rouleau suivant la revendication 7, **caractérisé en ce que** la densité de la matière cellulaire souple vaut approximativement 35 - 41 kg/m³.

9. Rouleau suivant l'une des revendications 1 - 8, **caractérisé en ce que** le diamètre de l'ouverture est inférieur d'approximativement 7 - 10 % au diamètre du noyau de rouleau.

10. Rouleau suivant la revendication 1, **caractérisé en ce que** les disques de maintien (5) sont appliqués, avec une certaine contrainte axiale, sur les surfaces frontales extérieures des disques de soutien (4') disposés extérieurement.

11. Rouleau suivant l'une des revendications 1 - 10, **caractérisé en ce que** l'épaisseur axiale (a) des disques de soutien (4, 4') est inférieure à la largeur de travail (b) des éléments de travail (3) suivant la direction axiale du rouleau.

12. Rouleau suivant la revendication 1, **caractérisé en ce que** chaque disque porteur (2) comporte un évidement central circulaire qui entoure le noyau de rouleau (1) au moins avec un espacement tel que le disque porteur (2) peut tourner vis-à-vis du noyau de rouleau.

13. Rouleau suivant l'une des revendications 1 - 12, **caractérisé en ce que** les disques porteurs (2) sont constitués d'une matière plastique flexible.

14. Rouleau suivant l'une des revendications 1 - 13, **caractérisé en ce que** les disques porteurs (2) sont constitués d'une matière textile, telle que feutre, tissu ou analogue.

15. Rouleau suivant l'une des revendications 1 - 14, **caractérisé en ce que** les éléments de travail (3) sont reliés au disque porteur (2) par l'intermédiaire de moyens de liaison facilement détachables.

16. Rouleau suivant la revendication 15, **caractérisé en ce que** les moyens de liaison sont réalisés sous forme de fermetures à boucles et crochets.
